# EUROPÄISCHE PATENTSCHRIFT

(11) **EP 1 110 165 B1**
(45) Veröffentlichungstag und Bekanntmachung des Hinweises auf die Patenterteilung: **08.05.2002**
(21) Anmeldenummer: 99947247.5
(22) Anmeldetag: 21.07.1999
(51) Int. Cl.: G06K 7/08

(54) **KONTAKTLOSES LESEGERÄT FÜR CHIPKARTEN**
CONTACTLESS READING DEVICE FOR CHIP CARDS
LECTEUR SANS CONTACT POUR CARTES A PUCE

(30) Priorität: 28.08.1998 DE 19840530
(43) Veröffentlichungstag der Anmeldung: 27.06.2001
(73) Patentinhaber: Häni-Prolectron AG, 9552 Bronschhofen (CH)
(72) Erfinder: RETKA, Manfred, D-13437 Berlin (DE); WITTE, Frank, D-14167 Berlin (DE)
(74) Vertreter: Fischer, Michael, Dr.
(86) Internationale Anmeldenummer: DE9902251
(87) Internationale Veröffentlichungsnummer: WO0013127

(56) Entgegenhaltungen:
- WO-A-97/09749
- WO-A-97/46964
- DE-A- 19 523 746
- DE-A- 19 530 640
- DE-A- 19 611 986
- FR-A- 2 679 670
- PATENT ABSTRACTS OF JAPAN vol. 1998, no. 14, 31. Dezember 1998 (1998-12-31) & JP 10 261054 A (TOSHIBA CORP), 29. September 1998 (1998-09-29)

## Beschreibung

Die Erfindung bezieht sich auf ein kontaktloses Lese- und Schreibgerät für eine Chipkarte nach dem Oberbegriff des Patentanspruches 1.

Derartige Schreib-Lesegeräte sind aus dem Siemens-Prospekt "SecureContactless™ Electronic Ticketing, Das Checkin/Check-out Terminal" bekannt (Bezugsquellen: Siemens AG Bereich Verkehrstechnik Fahrgeldmanagement, Postfach 910 220 DE - 12414 Berlin oder Häni-Prolectron AG, Industriestr., CH - 9552 Bronschhofen). Dieses vorbekannte Schreib-Lesegerät weist frontseitig eine sacklochförmige Ausnehmung zur Aufnahme der Chipkarte auf. Die Antenne des Schreib-Lesegerätes ist derart angeordnet, daß ihre elektromagnetischen Wellen in die Ausnehmung eingespeist werden. Die Funktion der Ausnehmung besteht darin, daß der Benutzer des Schreib-Lesegerätes vor den elektromagnetischen Wellen bzw. der Strahlung der Antenne des Lesegerätes durch die Ausnehmung sehr wirkungsvoll geschützt wird, weil das vorbekannte Schreib-Lesegerät durch die sacklochförmige Ausnehmung an der Frontseite eine Art abgeschirmten Leseraum aufweist, in den die Karte aufgrund der großzügig bemessenen Höhe der Ausnehmung zum Lesen bzw. zum Schreiben einfach einzuführen ist. Die elektromagnetischen Wellen der Antenne werden nur in diesen Leseraum eingestrahlt und sind daher gewissermaßen in diesem Leseraum gefangen, so daß ein Abstrahlen der elektromagnetischen Wellen senkrecht zur Frontseite in Richtung des Benutzers des Schreib-Lesegerätes also nahezu vollständig vermieden wird. Aus diesem Grund ist bei dem vorbekannten Schreib-Lesegerät auch ein unbeabsichtigtes Auslesen oder Beschreiben der Chipkarte nahezu ausgeschlossen, da die Chipkarte zum Auslesen oder Beschreiben stets in die Ausnehmung eingeführt werden muß; ein ungewolltes Auslesen oder Beschreiben der Chipkarte, die der Benutzer nur zufällig bei sich führt, ist also nicht möglich.

Kontaktlose Schreib-Lesgeräte für Chipkarten ohne Ausnehmung werden von verschiedenen Firmen kommerziell angeboten; eine Übersicht über diese Schreib-Lesegeräte läßt sich beispielsweise dem Prospekt "More Convenience for Passengers and More Reliability for Operators With Automatic Fare Collection" (Bestellnr. A19100-V200-B705-X-7600 bei Siemens AG in DE-Fürth) der Firmen Siemens und Cubic entnehmen. Allen diesen Geräten ist gemeinsam, daß mittels einer im Bereich der Frontplatte des Schreib-Lesegerätes angebrachten Antenne Signale in Form elektromagnetischer Wellen zu der auszulesenden bzw. zu beschreibenden Chipkarte gesendet werden oder von der Chipkarte gesendete Signale empfangen werden; dabei ist die Antenne bei den bekannten Geräten jeweils derart angebracht, daß die elektromagnetischen Wellen senkrecht zur Frontseitenebene in Richtung des Benutzers des Schreib-Lesegerätes abgestrahlt werden. Die Chipkarte ist also zum Auslesen und Beschreiben flach vor die Frontseite der bekannten Schreib-Lesegeräte zu halten. Der Benutzer eines Lesegerätes ohne Ausnehmung ist also im Unterschied zu einem Benutzer eines Schreib-Lesegerätes mit Ausnehmung vor den elektromagnetischen Wellen der Antenne des Schreib-Lesegerätes überhaupt nicht geschützt.

In den Dokumenten DE 196 11 986 A1 und DE 195 23 746 A1 sind ein Schreib-/Lesegerät mit einer relativ kleinen Lesemulde offenbart. Das in der Schrift DE 196 11 986 A1 offenbarte elektronische Schloss zeichnet sich dadurch aus, dass es nur über eine lokale Energieversorgung verfügt und daher besonders für den Einbau in Türen (z.B. zu Hotelzimmern) geeignet ist. In der Schrift DE 195 23 746 A1 wird als Schreib/Lesevorrichtung ein länglicher Kanal vorgeschlagen, um in diesem für eine bestimmte Dauer ein sicherer Datenaustausch zu gewährleisten.

In WO 97/09749 und FR 2 679 670 A sind Schreib-/Lesegeräte mit einem relative grossen "Lesemulde" angegeben. Die Schrift WO 97/09749 offenbart ein Schreib-/Lesegerät mit einem Annäherungsschutz, um Personen, die Implantantate in sich tragen, wirksam vor dem Einfluss der vom Schreib-/Lesegerät ausgesandten elektromagnetischen Energie zu schützen.

Der Erfindung liegt die Aufgabe zugrunde, ein Schreib/Lesegerät anzugeben, das auch bei besonders niedrigen Sendeleistungen der Antenne ein sicheres Auslesen und Beschreiben von Chipkarten ermöglicht.

Diese Aufgabe durch die im Patentanspruch 1 angegebenen Merkmale gelöst.

Der wesentliche Vorteil des erfindungsgemäßen Lese- und Schreibgerätes besteht darin, daß dieses durch die Anordnung der Antenne an einer Seitenwand der Ausnehmung auch bei sehr wenig Antennen-Sendeleistung sehr zuverlässig betrieben werden kann, weil die von der Antenne erzeugten elektromagnetischen Wellen die Ausnehmung sehr gleichmäßig "füllen", so daß auch bei geringer Sendeleistung ein sicheres Auslesen und Beschreiben von Chipkarten möglich ist.

Um zu erreichen, daß besonders wenig Sendeleistung der Antenne nach außen dringen und auf den Benutzer des Lese- und Schreibgerätes einwirken kann, wird es als vorteilhaft angesehen, wenn die Antenne derart angebracht ist, daß die Hauptstrahlachse ihrer Hauptstrahlkeule etwa parallel zur öffnungsfläche der Ausnehmung liegt.

Besonders geeignete Antennen für Lesegeräte sind beispielsweise Rahmenantennen, so daß es als vorteilhaft angesehen wird, wenn die Antenne eine Rahmenantenne ist. Die Rahmenantenne kann beispielsweise rechteckig oder rund ausgeführt sein.

Besonders gleichmäßig läßt sich die Ausnehmung mit den elektromagnetischen Wellen der Antenne füllen, wenn die Abmessungen der Rahmenantenne an die Abmessungen der Ausnehmung angepaßt sind.

Besonders zuverlässig kann der Benutzer des Lese- und Schreibgerätes vor der elektromagnetischen Strahlung der Antenne geschützt werden, wenn die Ausnehmung ein Sackloch bildet, weil dann besonders wenig Sendeleistung der Antenne nach außen dringen kann.

Zur Erläuterung der Erfindung ist in einer Figur ein Ausführungsbeispiel für ein erfindungsgemäßes Schreib-/Lesegerät mit einer sacklochförmigen Ausnehmung dargestellt.

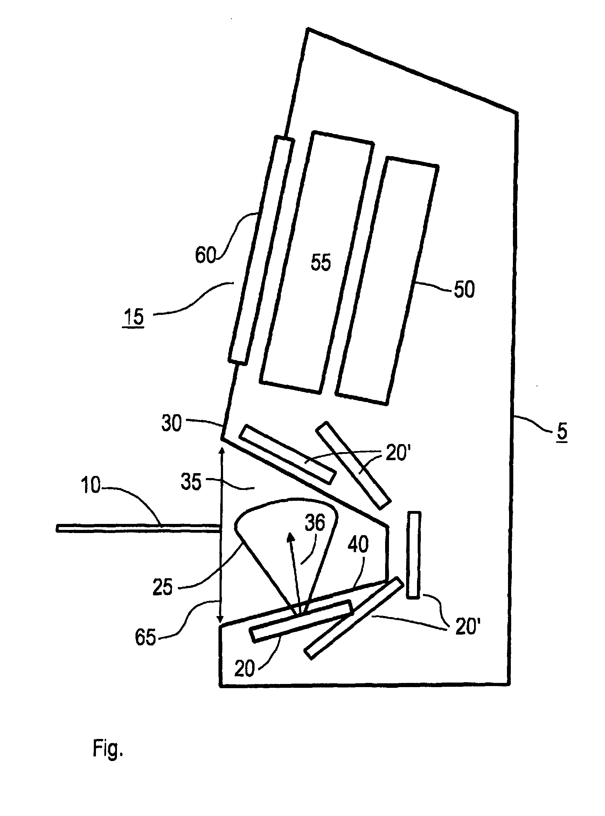

Die Figur zeigt ein Schreib-/Lesegerät 5 für eine Chipkarte 10. Das Schreib-/Lesegerät weist eine elektronische Schreibund Leseeinrichtung 15 zum kontaktlosen Auslesen von auf der Chipkarte 10 gespeicherten Daten und zum kontaktlosen Beschreiben der Chipkarte 10 mit Daten auf. Die Schreib- und Leseeinrichtung 15 ist hierzu mit einer Antenne 20 ausgestattet. Von der Antenne 20 erzeugte elektromagnetische Wellen sind in der Figur durch eine Abstrahlkeule 25 gekennzeichnet, die gleichzeitig die Strahlungscharakteristik der Antenne 20 darstellt.

Das Schreib-/Lesegerät 5 weist an einer Frontseite 30 eine sacklochförmige Ausnehmung 35 auf, in die die Chipkarte 10 zum Auslesen und Beschreiben eingeführt wird. Die elektromagnetischen Wellen der Antenne 20 werden in die sacklochförmige Ausnehmung 35 eingespeist; dies läßt sich der Figur durch die Lage der Hauptstrahlkeule 25 der Antenne 20 entnehmen. Man kann in der Figur darüber hinaus erkennen, daß die Antenne derart angebracht ist, daß die Hauptstrahlachse 36 der Hauptstrahlkeule 25 weitgehend parallel zur Öffnungsfläche der Ausnehmung liegt.

Wie in der Figur dargestellt ist, ist die Antenne 20 an einer Seitenwand 40 der sacklochförmigen Ausnehmung 35 derart angeordnet, daß die elektromagnetischen Wellen bzw. die Strahlung der Antenne 20 in das Innere der Ausnehmung 35 gerichtet sind. Für die Funktionsweise des Lese- und Schreibgerätes ist die Antenne 20 allein ausreichend. Um eine besonders gleichmäßige Verteilung elektromagnetischer Wellen in dem Sackloch 35 zu erreichen, sind in dem Schreib-/Lesegerät 5 weitere Antennen 20' vorgesehen, die ebenfalls durch die Schreib- und Leseeinrichtung 15 angesteuert werden und mit denen die gleichen elektromagnetische Wellen in die sacklochförmige Ausnehmung 35 eingespeist werden.

Bei den Antennen 20 bzw. 20' kann es sich beispielsweise um Rahmenantennen handeln, deren Abmessungen an die Abmessungen der sacklochförmigen Ausnehmung 35 angepaßt sind; die Rahmenantennen können beispielsweise durch Leiterschleifen gebildet sein. Die Schreib- und Leseeinrichtung 15 ist mit einer Stromversorgungseinrichtung 50, einer Steuerelektronik 55 und einem LCD-Display 60 ausgestattet, mit dem Aufgabeinformationen des Lese- und Schreibgerätes 5 an den Benutzer des Leseund Schreibgerätes 5 ausgegeben werden können.

Um ein sicheres Auslesen bzw. Beschreiben der Chipkarte zu ermöglichen, ist die sacklochförmige Ausnehmung 35 an ihrer Öffnung in der durch einen Doppelpfeil 65 gekennzeichneten Richtung so bemessen, daß die Chipkarte 10 nur in der in der Figur dargestellten Lage in eine Ausnehmung 35 einführbar ist und nicht um 90° um ihre Längsachse gedreht. Auch mit der Flachseite läßt sich die Chipkarte 10 nicht in die Ausnehmung 35 einführen.

## Patentansprüche

1. Lese- und Schreibgerät (5) für eine Chip-Karte (10) mit
- einer mindestens eine Antenne (20) aufweisenden elektronischen Schreib- und Leseeinrichtung (15), die zum kontaktlosen Auslesen von auf der Chip-Karte (10) gespeicherten Daten und - mittels durch die Antenne (20) erzeugter elektromagnetischer Wellen (25) - zum kontaktlosen Beschreiben der Chip-Karte (10) mit Daten geeignet ist, und mit
- einem zur Aufnahme der Chipkarte (10) vorgesehenen frontseitigen Sackloch (35) mit einer Sacklochöffnung, mit an die Sacklochöffnung angrenzenden Sacklochseitenwänden sowie mit einem der Sachlochöffnung gegenüberliegenden Sacklochboden,
- wobei die Weite (65) der Sacklochöffnung einem Mehrfachen der Dicke der Chipkarte (10) entspricht und
- wobei die Antenne (20) derart angeordnet ist, dass ihre elektromagnetischen Wellen (25) in das Sackloch (35) eingespeist werden,
**dadurch gekennzeichnet, dass**
- die Antenne (20) im Bereich einer Sacklochseitenwand (40) des Sacklochs (35) angebracht ist.

2. Lese- und Schreibgerät nach Anspruch 1,
**dadurch gekennzeichnet, dass**
- die Antenne (20) eine Rahmenantenne ist.

3. Lese- und Schreibgerät nach Anspruch 2,
**dadurch gekennzeichnet, dass**
- die Abmessungen der Rahmenantenne an die Abmessungen des Sacklochs angepasst sind.

4. Lese- und Schreibgerät nach einem der vorangehenden Ansprüche,
**dadurch gekennzeichnet, dass**
- die Antenne (20) derart angebracht ist, dass die Hauptstrahlachse (36) ihrer Hauptstrahlkeule (35) etwa parallel zur Öffnungsfläche des Sacklochs (35) liegt.

## Claims

1. Read/write device (5) for a smart card (10) with
- an electronic read/write unit (15) having at least one antenna (20), said unit being suitable for contactless reading of data stored on the smart card (10) and - by means of electromagnetic waves (25) generated by the antenna (20) - for contactless writing of data to the smart card (10), and with
- a blind hole (35) provided on the front side for receiving the smart card (10) with a blind-hole opening, with blind-hole side walls adjoining the blind-hole opening and with a blind-hole base opposite the blind-hole opening,
- where the width (65) of the blind-hole opening is a multiple of the thickness of the smart card (10) and
- where the antenna (20) is arranged so that its electromagnetic waves (25) are fed into the blind hole (35),
**characterised in that**
- the antenna (20) is arranged in the area of a blind-hole side wall (40) of the blind hole (35).

2. Read/write device according to Claim 1, **characterised in that**
- the antenna (20) is a loop antenna.

3. Read/write device according to Claim 2, **characterised in that**
- the dimensions of the loop antenna are adjusted to the dimensions of the blind hole.

4. Read/write device according to one of the preceding claims, **characterised in that**
- the antenna (20) is arranged so that the principal radiation axis (36) of its principal radiation beam (35) lies approximately parallel to the aperture of the blind hole (35).

## Revendications

1. Appareil (5) de lecture et d'écriture pour une carte (10) à puce comprenant
- un dispositif (15) électronique d'écriture et de lecture qui comprend au moins une antenne (20) et qui convient pour la lecture sans contact de données mémorisées sur la carte (10) à puce et, au moyen d'ondes (25) électromagnétiques produites par l'antenne (20), pour l'écriture sans contact de données sur la carte (10) à puce,
- un trou (35) borgne du côté frontal qui est prévu pour recevoir la carte (10) à puce et qui a une ouverture de trou borgne ayant des parois latérales de trou borgne adjacentes à l'ouverture du trou borgne, ainsi qu'un fond de trou borgne opposé à l'ouverture du trou borgne,
- la largeur (65) de l'ouverture du trou borgne correspondant à un multiple de l'épaisseur de la carte (10) à puce, et
- l'antenne (20) étant disposée de façon que ses ondes (25) électromagnétiques soient injectées dans le trou (35) borgne,
**caractérisé en ce que**
- l'antenne (20) est disposée dans la région d'une paroi (40) latérale du trou (35) borgne.

2. Appareil de lecture et d'écriture suivant la revendication 1, **caractérisé en ce que**
- l'antenne (20) est une antenne à cadre.

3. Appareil de lecture et d'écriture suivant la revendication 2, **caractérisé en ce que**
- les dimensions de l'antenne à cadre sont adaptées aux dimensions du trou borgne.

4. Appareil de lecture et d'écriture suivant l'une des revendications précédentes, **caractérisé en ce que**
- l'antenne est disposée de façon que l'axe (36) principal de rayonnement de son cône (35) principal de rayonnement soit à peu près parallèle à la surface d'ouverture du trou (35) borgne.
